# EUROPÄISCHE PATENTSCHRIFT

(11) **EP 0 548 005 B1**
(45) Veröffentlichungstag und Bekanntmachung des Hinweises auf die Patenterteilung: **18.12.1996**
(21) Anmeldenummer: 92810903.2
(22) Anmeldetag: 20.11.1992
(51) Int. Cl.: F02B 67/00, F16M 9/00

(54) **Stationäre Anlage mit Hubkolbenbrennkraftmaschine und Turboaufladung**
Stationary arrangement with internal combustion engine and turbocharging system
Dispositif stationnaire avec un moteur de combustion interne et un turbocompresseur

(30) Priorität: 12.12.1991 CH 3659/91
(43) Veröffentlichungstag der Anmeldung: 23.06.1993
(73) Patentinhaber: NEW SULZER DIESEL AG, CH-8401 Winterthur (CH)
(72) Erfinder: Zehnder, Herbert, CH-8356 Ettenhausen (CH); Schweizer, Bruno, CH-8444 Henggart (CH); Meyer, Friedrich, CH-8404 Winterthur (CH)
(74) Vertreter: Hammer, Bruno, Dr.

(56) Entgegenhaltungen:
- CH-A- 241 269
- DE-C- 489 882
- GB-A- 281 723
- GB-A- 524 665

## Beschreibung

Die Erfindung betrifft eine stationäre Anlage mit mindestens einer mehrere Zylinder aufweisenden Hubkolbenbrennkraftmaschine gemäss dem Oberbegriff des Anspruchs 1. In stationären Anlagen dienen die Brennkraftmaschinen zum Antrieb von elektrischen Generatoren.

Bei stationären Anlagen mit Turboaufladung wurden bisher Zweitakt-Dieselbrennkraftmaschinen mit Turboaufladung, wie sie von Schiffsantrieben her bekannt sind, verwendet, wobei die Turboladegruppe und ein zugehöriger Ladeluftkühler auf der Höhe der Zylinder angeordnet und direkt am Brennkraftmaschinengehäuse befestigt sind. Dabei liegt das Auspuffsammelrohr unterhalb und die Abgasleitung oberhalb der Turboladegruppe. Die Abgasleitung befindet sich relativ zu den Zylindern sehr hoch und überragt die Brennkraftmaschine. Bei Verwendung solcher Brennkraftmaschinen in stationären Anlagen ergibt sich eine relativ grosse Bauhöhe für die die Brennkraftmaschine umgebende Halle, zumal die Brennkraftmaschine mit dem Turboaufladesystem noch von einem Kran überfahrbar sein muss. Durch die Befestigung der Komponenten des Turboaufladesystems, nämlich Auspuffsammelrohr, Turbolader, Abgasleitung, Ladeluftreceiver und Ladeluftkühler, am Brennkraftmaschinengehäuse ergibt sich ein ungünstiger Einfluss auf das Schwingungsverhalten der Brennkraftmaschine, da die genannten Komponenten sehr schwer sind und gleichzeitig zum Teil weit ausladend angeordnet sind.

GB-A-281 723 offenbart eine mehrzylindrige Brennkraftmaschine, bei der der Ladeluftkühler seitlich neben den Zylindern auf der Unterseite der an dem Brennkraftmaschinengehäuse auf Zylinderhöhe angebrachten Maschinenplattform angeordnet oder gegebenenfalls auf Zylinderhöhe an einer Wand befestigt ist und der Turbolader entweder eine Position auf der Maschinenplattform oberhalb des Ladeluftkühlers oder auf dem Maschinenhausboden unter dem Ladeluftkühler einnimmt. Überlegungen, wie durch eine geeignete Anordnung der Komponenten des Turboaufladesystems das Schwingungsverhalten optimiert werden kann, nennt GB-A-281 723 nicht.

Der Erfindung liegt die Aufgabe zugrunde, eine stationäre Anlage der eingangs genannten Art dahingehend abzuändern, dass der konstruktive Aufwand verringert und das Schwingungsverhalten verbessert wird.

Diese Aufgabe wird erfindungsgemäss dadurch gelöst, dass die Turboladegruppe getrennt von der Hubkolbenbrennkraftmaschine seitlich neben dieser unterhalb des unteren Endes der Zylinder angeordnet und zusammen mit der Abgasleitung auf einem Fundament für die Turboladegruppe abgestützt ist und dass der Ladeluftkühler getrennt von der Hubkolbenbrennkraftmaschine unterhalb der Turboladegruppe am Fundament angeordnet ist.

Durch die von der Brennkraftmaschine getrennte Aufstellung der Turboladegruppe, des Ladeluftkühlers und der Abgasleitung auf einem wesentlich tieferen Niveau als bei den Schiffsantriebsmaschinen lässt sich die Bauhöhe der umgebenden Halle verringern. Da ausserdem die Turboladegruppe, der Ladeluftkühler und die Abgasleitung nicht mehr am Brennkraftmaschinengehäuse befestigt sind, wird das Schwingungsverhalten der Brennkraftmaschine wesentlich verbessert. Durch die Tieferlegung der Turboladegruppe erhält diese eine bessere Zugänglichkeit. Da das Brennkraftmaschinengehäuse keine Tragfunktion mehr für die Turboladegruppe und die Abgasleitung übernehmen muss, vereinfacht sich auch der Konstruktionsaufwand für die Brennkraftmaschine. Ferner lassen sich periodische Reinigungsarbeiten am Ladeluftkühler einfacher als bisher durchführen.

Einige Ausführungsbeispiele der Erfindung sind in der folgenden Beschreibung anhand der Zeichnung näher erläutert. Es zeigen:
- Fig.1: schematisch vereinfacht eine Stirnansicht einer stationären Hubkolbenbrennkraftmaschine mit einem Turboaufladesystem und
- Fig.2: schematisch vereinfacht ebenfalls eine Stirnansicht einer Hubkolbenbrennkraftmaschine mit gegenüber Fig.1 abgewandeltem Turboaufladesystem.

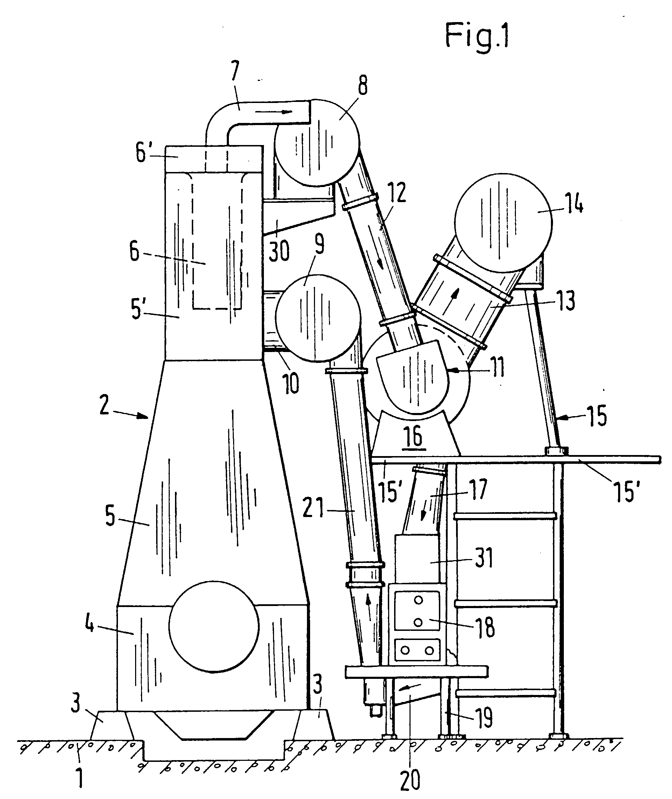

Gemäss Fig.1 ist eine nach dem 2-Takt-Dieselverfahren arbeitende Hubkolbenbrennkraftmaschine 2 über Fundamentschienen 3 auf einem Fundament 1 aus Beton gelagert, das zugleich den Hallenboden einer stationären Kraftwerksanlage bildet. Die Brennkraftmaschine 2 der Kreuzkopfbauart weist eine Grundplatte 4 auf, in der die nicht näher dargestellte Kurbelwelle gelagert ist und auf der ein Maschinengehäuse 5 aufgesetzt ist, in dessen oberen Abschnitt 5' mehrere, in einer Reihe hintereinander angeordnete Zylinder 6 mit vertikaler Achse in an sich bekannter Weise befestigt sind. Am oberen Ende jedes Zylinders 6 befindet sich ein Zylinderdeckel 6', in dessen Zentrum ein nicht gezeigtes Gasauslassventil angeordnet sowie ein Auspuffstutzen 7 in Form eines 90° Krümmers angeschlossen ist. Der Auspuffstutzen 7 mündet tangential in ein gemeinsames zylindrisches, horizontal und parallel zur Reihe der Zylinder 6 angeordnetes Auspuffsammelrohr 8. Der Querschnitt des Auspuffsammelrohres 8 liegt im wesentlichen unterhalb der Mündung des Auspuffstutzens 7. Das Auspuffsammelrohr 8 wird von einer am Gehäuseabschnitt 5' auskragenden Konsole 30 getragen. Unterhalb des Auspuffsammelrohres 8 ist auf der Höhe des unteren Endes der Zylinder 6 ein Ladeluftreceiver 9 vorgesehen, der je Zylinder über einen Rohrstutzen 10 mit dem Gehäuseabschnitt 5' verbunden ist. Im unteren Bereich der Zylinder 6 sind diese mit nicht näher dargestellten Einlassschlitzen für die vom Receiver 9 kommende Ladeluft versehen. Die Brennkraftmaschine hat also Längsspülung.

Erfindungsgemäss ist unterhalb des unteren Endes der Zylinder 6 eine aus einer Gasturbine und einem Kompressor bestehende Turboladegruppe 11 vorgesehen, deren Aufbau allgemein bekannt ist und von der in Fig.1 das Eintrittsgehäuse der Gasturbine zu erkennen ist. Das Eintrittsgehäuse der Turboladegruppe 11 ist über eine Auspuffleitung 12 mit dem Auspuffsammelrohr 8 verbunden. Das Austrittsgehäuse der Gasturbine ist über einen Abgasstutzen 13, der als Kompensator ausgebildet sein kann, mit einer Abgasleitung 14 verbunden. Die Abgasleitung 14 führt über einen nicht dargestellten Abgaskessel ins Freie. Zur Abstützung der Turboladegruppe 11 und der Abgasleitung 14 ist eine z.B. aus Stahlprofilen bestehende Stützkonstruktion 15 vorgesehen, die auf dem Fundament oder Hallenboden 1 seitlich neben der Brennkraftmaschine 2 befestigt ist. Zur Lagerung der Turboladegruppe 11 weist die Stützkonstruktion 15 ein Podest 15' auf, auf dem die Ladegruppe mit ihren Füssen 16 befestigt ist.

Unterhalb der Turboladegruppe 11 auf dem Podest 15' ist ein Ladeluftkühler 18 angeordnet, der auf einem separaten Stützgerüst 19 befestigt ist, das ebenfalls auf dem Hallenboden 1 befestigt ist. Der in Fig.1 nicht sichtbare Kompressor der Turboladegruppe 11 saugt Umgebungsluft an und fördert diese nach einer Druckerhöhung über einen Diffusor 17 in einen unterhalb der Ladegruppe 11 angeordneten Lufteintrittskanal 31, der mit dem Lufteintritt des Ladeluftkühlers 18 verbunden ist. Der Luftaustrittskanal 20 des Ladeluftkühlers 18 ist über eine Ladeluftleitung 21 mit dem Ladeluftreceiver 9 verbunden.

Je nach der Anzahl der Zylinder 6 in einer Reihe können über die Länge der Brennkraftmaschine 2 verteilt, auch zwei oder mehrere Ladegruppen 11 angeordnet sein.

Das beschriebene Turboaufladesystem, bestehend aus der Turboladegruppe oder den Ladegruppen 11 der Abgasleitung 14 und dem Ladeluftkühler 18, ist getrennt vor der Brennkraftmaschine 2 auf dem Fundament 1 abgestützt und über die Auspuffleitung 12 und die Ladeluftleitung 21 mit der Brennkraftmaschine verbunden. Es eignet sich besonders für den Einbau in bestehende stationäre Kraftwerksanlagen, bei denen keine Möglichkeit besteht, den Ladeluftkühler unterhalb des Maschinenfundamentes unterzubringen.

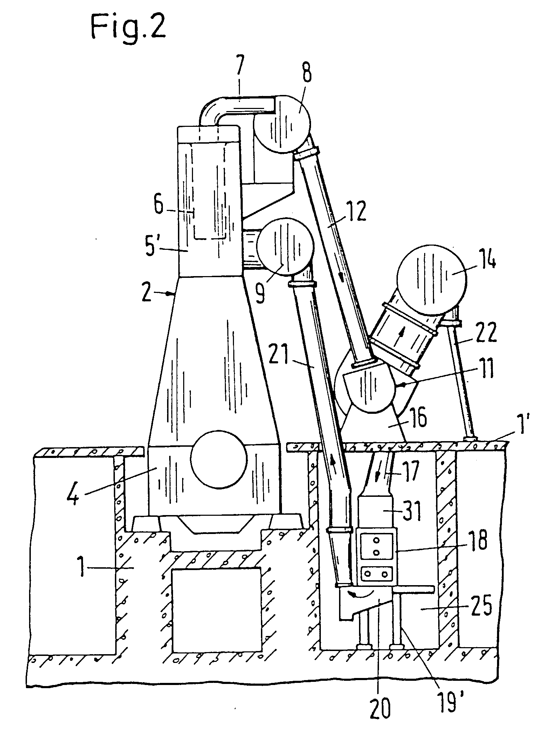

Beim Ausführungsbeispiel gemäss Fig.2 ist eine Hubkolbenbrennkraftmaschine 2, die im wesentlichen gleich aufgebaut ist wie diejenige in Fig.1, auf einem Maschinenfundament 1 gelagert, wobei jedoch der Hallenboden 1' auf einer höheren Ebene liegt als die Fundamentschienen 3, nämlich ungefähr auf der Höhe der Oberkante der Grundplatte 4. Die Anordnung der Auspuffstutzen 7 und des Auspuffsammelrohres 8 ist gleich wie in Fig.1. Die Turboladegruppe 11 ist wiederum über eine Auspuffleitung 12 mit dem Auspuffsammelrohr 8 verbunden, ist jedoch über die Füsse 16 direkt auf dem Hallenboden 1' seitlich neben der Brennkraftmaschine 2 befestigt. Zum Abstützen der Abgasleitung 14 sind, über deren Länge verteilt, mehrere Streben 22 vorgesehen, von denen in Fig.2 nur eine zu sehen ist und die ebenfalls am Hallenboden 1' befestigt sind.

Im Maschinenfundament 1 ist in Fig.2 rechts von der Brennkraftmaschine 2 unter dem Hallenboden 1' ein Raum 25 zur Aufnahme des Ladeluftkühlers 18 vorgesehen. Der Diffusor 17 des Kompressors führt durch den Hallenboden 1' hindurch nach unten zum Lufteintrittskanal 31 des Ladeluftkühlers 18, dessen Luftaustrittskanal 20 über die Ladeluftleitung 21 mit dem Ladeluftreceiver 9 verbunden ist.

Zum Abstützen des Ladeluftkühlers 18 ist - ähnlich wie beim Ausführungsbeispiel gemäss Fig.1 - ein Stützgerüst 19' vorgesehen, das am Boden des Raumes 25 befestigt ist.

Bei dem Ausführungsbeispiel nach Fig.2 besteht also das Turboaufladesystem wiederum aus der Turboladegruppe 11 und der Abgasleitung 14 sowie dem unterhalb der Ladegruppe angeordneten Ladeluftkühler 18 und ist getrennt von der Brennkraftmaschine 2 seitlich neben dieser angeordnet.

Im Falle der Anwendung mehrerer Turboladegruppen gehört zu jeder Gruppe ein Ladeluftkühler.

## Patentansprüche

1. Stationäre Anlage mit mindestens einer mehrere Zylinder (6) aufweisenden Hubkolbenbrennkraftmaschine (2) mit einem am oberen Ende der Zylinder (6) angeschlossenen Auspuffsammelrohr (8) und mit mindestens einer aus einer Gasturbine und einem Kompressor bestehenden Turboladegruppe (11) auf dem Fundament (1,1'), wobei die Gasturbine eintrittsseitig mit dem Auspuffsammelrohr (8) und austrittsseitig mit einer Abgasleitung (14) verbunden ist und wobei die vom Kompressor kommende Ladeluft durch einen Ladeluftkühler (18) geleitet und im Bereich des unteren Zylinderendes den Zylindern (6) zugeführt wird, dadurch **gekennzeichnet**, dass zusätzlich zur Turboladegruppe (11), der Ladeluftkühler (18) getrennt von der Hubkolbenbrennkraftmaschine (2) seitlich neben dieser unterhalb des unteren Endes der Zylinder (6) angeordnet sind und die Turboladegruppe (11) zusammen mit der Abgasleitung (14) auf einem Fundament (1, 1') für die Turboladegruppe (11) abgestützt ist und dass der Ladeluftkühler (18) unterhalb der Turboladegruppe (11) am Fundament (1,1') angeordnet ist.

2. Anlage nach Anspruch 1, dadurch gekennzeichnet, dass die Turboladegruppe (11) und die Abgasleitung (14) über ein Stützgerüst (15) auf dem Fundament (1) befestigt sind.

3. Anlage nach Anspruch 1, dadurch gekennzeichnet, dass die Turboladegruppe (11) selbst auf dem Fundament (1') befestigt ist und die Abgasleitung (14) über Streben (22) auf dem Fundament (1') abgestützt ist.

4. Anlage nach Anspruch 1, dadurch gekennzeichnet, dass die Hubkolbenbrennkraftmaschine (2) eine Grundplatte (4) aufweist, in der die Kurbelwelle gelagert ist und über die die Brennkraftmaschine (2) auf einem Fundament (1) befestigt ist, dass das die Turboladegruppe (11) tragende Fundament (1') ungefähr auf der Höhe der Oberkante der Grundplatte (4) liegt und zugleich einen Hallenboden bildet.

5. Anlage nach Anspruch 3 oder 4, dadurch gekennzeichnet, dass der Ladeluftkühler (18) in einem unter dem die Turboladegruppe (11) tragenden Fundament (1') vorgesehenen Raum (25) angeordnet ist.

## Claims

1. Stationary installation comprising at least one reciprocating piston internal combustion engine (2) having a plurality of cylinders (6) with an exhaust manifold (8) attached to the upper end of the cylinders (6) and with at least one turbocharger group (11) consisting of a gas turbine and a compressor on a foundation (1, 1'), with the gas turbine being connected at the inlet side to the exhaust manifold (8) and at the outlet side to an exhaust gas duct (14), and wherein the charging air coming from the compressor is fed through a charge air cooler (18) and is supplied to the cylinders (6) in the region of the lower cylinder end, characterised in that in addition to the turbocharger group (11), the charge air cooler (18) is arranged separate from the reciprocating piston internal combustion engine (2) laterally alongside the latter beneath the lower end of the cylinders (6) and the turbocharger group (11) together with the exhaust gas duct (14) is supported on a foundation (1, 1') for the turbocharger group (11) and in that the charge air cooler (18) is arranged beneath the turbocharger group (11) on the foundation (1, 1').

2. Installation in accordance with claim 1, characterised in that the turbocharger group (11) and the exhaust gas duct (14) are secured on the foundation (1) via a support frame (15).

3. Installation in accordance with claim 1, characterised in that the turbocharger group (11) is itself secured to the foundation (1') and the exhaust gas duct (14) is supported on the foundation (1') via struts (22).

4. Installation in accordance with claim 1, characterised in that the reciprocating piston internal combustion engine (2) has a base plate (4) in which the crankshaft is journalled and is secured via the internal combustion engine (2) on a foundation (1); in that the foundation (1') carrying the turbocharger group (11) lies approximately at the level of the upper edge of the base plate (4) and simultaneously forms a hall floor.

5. Installation in accordance with claim 3 or claim 4, characterised in that the charge air cooler (18) is arranged in a space (25) provided beneath the foundation (1') carrying the turbocharger group (11).

## Revendications

1. Installation stationnaire avec au moins un moteur à combustion interne (2) à pistons alternatifs, présentant plusieurs cylindres (6) avec un tube collecteur d'échappement (8) raccordé à l'extrémité supérieure des cylindres (6) et avec au moins un groupe turbocompresseur à suralimentation (11), se composant d'une turbine à gaz et d'un compresseur sur les fondations (1,1'), la turbine à gaz étant reliée côté entrée au tube collecteur d'échappement (8) et côté sortie à une conduite de gaz d'échappement (14) et l'air de charge provenant du compresseur est conduit par un refroidisseur d'air de charge (18) et est mené dans la zone de l'extrémité inférieure de cylindre des cylindres (6), caractérisée en ce qu'en plus du groupe turbocompresseur à suralimentation (11), le refroidisseur d'air de charge (18) est agencé séparément du moteur à combustion interne à pistons alternatifs (2), latéralement à côté de celui-ci, en dessous de l'extrémité inférieure des cylindres (6), et le groupe turbocompresseur à suralimentation (11) est soutenu avec la conduite de gaz d'échappement (14) sur les fondations (1, 1') pour le groupe turbocompresseur à suralimentation (11) et en ce que le refroidisseur d'air de charge (18) est agencé en dessous du groupe turbocompresseur à suralimentation (11) sur les fondations (1,1').

2. Installation selon la revendication 1, caractérisée en ce que le groupe turbocompresseur à suralimentation (11) et la conduite de gaz d'échappement (14) sont fixés par un équipement de soutien (11) sur les fondations (1).

3. Installation selon la revendication 1, caractérisée en ce que le groupe turbocompresseur à suralimentation (11) est lui-même fixé sur les fondations (1') et la conduite de gaz d'échappement (14) est soutenue par des entretoises (22) sur les fondations (1').

4. Installation selon la revendication 1, caractérisée en ce que le moteur à combustion interne à pistons alternatifs (2) présente une plaque de base (4), dans laquelle est logé le vilebrequin et par où le moteur à combustion interne (2) est fixé sur des fondations (1), en ce que les fondations (1') portant le groupe turbocompresseur à suralimentation se trouvent à peu près à la hauteur du bord supérieur de la plaque de base (4) et forment en même temps le sol de la salle.

5. Installation selon la revendication 3 ou 4, caractérisée en ce que le refroidisseur d'air de charge (18) est agencé dans un espace prévu en dessous des fondations (1') portant le groupe turbocompresseur à suralimentation.
